(19) **Europäisches Patentamt**
**European Patent Office**
**Office européen des brevets**

(11) **EP 0 397 136 B1**

(12) **EUROPEAN PATENT SPECIFICATION**

(45) Date of publication and mention
of the grant of the patent:
**18.12.1996 Bulletin 1996/51**

(51) Int Cl.[6]: **G10L 9/00**, G10L 5/06

(21) Application number: **90108724.7**

(22) Date of filing: **09.05.1990**

(54) **Pattern recognition method by using reference patterns each of which is defined by state models**

Einrichtung zur Mustererkennung unter Anwendung von durch Zustandsmodelle bestimmten Bezugsmustern

Procédé de reconnaissance de formes utilisant des formes de référence définies par des modèles d'états

(84) Designated Contracting States:
**DE FR GB**

(30) Priority: **10.05.1989 JP 117706/89**

(43) Date of publication of application:
**14.11.1990 Bulletin 1990/46**

(73) Proprietor: **NEC CORPORATION**
**Tokyo (JP)**

(72) Inventor: **Iso, Ken-ichi**
**Minato-ku, Tokyo (JP)**

(74) Representative: **VOSSIUS & PARTNER**
**Postfach 86 07 67**
**81634 München (DE)**

(56) References cited:
- **INTERNATIONAL CONFERENCE ON ACOUSTICS SPEECH AND SIGNAL PROCESSING vol. 1, 3 April 1990, Albuquerque, New Mexico, USA, pp. 441-444; ISO, K.-I.; WATANABE, T.: 'Speaker-independent word recognition using a neural prediction model'**
- **INTERNATIONAL CONFERENCE ON ACOUSTICS SPEECH AND SIGNAL PROCESSING vol. 1, 3 April 1990, Albuquerque, New Mexico, USA, pp. 437-440; TEBELSKIS, J.; WAIBEL, A.: 'Large vocabulary recognition using linked predictive neural networks'**
- **CAMBRIDGE UNIVERSITY ENGINEERING DEPARTEMENT TECHNICAL REPORT CUED/F-INFENG/TR27 1988, Cambridge, GB, pp. 1-13; F. FALLSIDE: 'On the analysis of linear predictive data such as speech by a class of single layer connectionist models'**
- **INTERNATIONAL CONFERENCE ON ACOUSTICS SPEECH AND SIGNAL PROCESSING vol. 1, 23 May 1989, Glasgow, Scotland, UK, pp. 29-32; SAKOE, H. et al.: 'Speaker-independent word recognition using dynamic programming neural networks'**
- **INTERNATIONAL CONFERENCE ON ACOUSTICS SPEECH AND SIGNAL PROCESSING vol. 1, 11 April 1988, New York, USA, pp. 107-110; WAIBEL, A. et al.: 'Phoneme recognition: neural networks vs. Hidden Markov Model'**

## Description

This invention relates to a pattern recognition method of recognizing an input pattern as a recognized pattern selected from a plurality of reference patterns which represent categories of recognition objects, respectively. The input pattern is represented by a time sequence of input feature vectors and specifically represents speech sound.

In a pattern recognition method, such as a speech recognition method, reference patterns are necessary for pattern recognition. Each reference pattern is defined by a signal model. Various signal models of the type are already known. By way of example, a signal model is described in an article contributed by L. R. Rabiner and B. H. Juang to IEEE ASSP MAGAZINE, January 1986, pages 4 to 16, under the title of "An Introduction to Hidden Markov Models". The signal model according to Rabiner et al is called a hidden Markov model (HMM). The hidden Markov model carries out modeling of the reference pattern on the assumption that the time sequence of the input feature vectors is produced by Markov stochastic process. The hidden Markov model is characterized by a plurality of states and transitions between the states. Each state produces a pattern vector in accordance with a predetermined probability distribution. Each transition is accompanied by a predetermined state transition probability. A distance between the input pattern and the reference pattern is given by a likelihood so that the hidden Markov model generates the time sequence of the input feature vectors.

Inasmuch as the hidden Markov model carries out modeling of the reference pattern on the assumption that the time sequence of the input feature vectors is generated in accordance with the Markov stochastic process, a temporal correlation between the input feature vectors in the hidden Markov model is equivalent to a short temporal correlation between the input feature vectors adjacent to each other. Accordingly, it is difficult for the hidden Markov model to directly model a long temporal correlation between feature vectors in such as a speech pattern that are temporally apart from each other. For example, the long temporal correlation is a correlation for an utterance between an utterance speed of former half portion and another one of latter half portion in the utterance.

In addition, the hidden Markov model independently carries out modeling of "a temporal structure among feature vectors" and of "a distribution in a vector space for each feature vector". It is therefore difficult to carry out modeling of the reference pattern in consideration of an inter-dependence, namely, a spatial and temporal correlation between the temporal structure among the feature vectors and the distribution in the vector space of each feature vector in such as the speech pattern due to utterance.

Summary of the Invention:

It is an object of the present invention to provide a pattern recognition method by using a model of reference pattern, each of which has a high power of expression.

It is another object of the present invention to provide a pattern recognition method of the type described, by using the reference patterns, each taking account of a temporal correlation between feature vectors which are apart from one another by an optional time interval between the feature vectors in a temporal structure.

It is still another object of the present invention to provide a pattern recognition method of the type described, by using the reference patterns each of which takes account of a spatial and temporal correlation between the temporal structure among the feature vectors and a distribution in a vector space for each feature vector.

It is an additional object of the present invention to provide a reference pattern training method which is capable of automatically constructing state models of a reference pattern from a plurality of training patterns.

A method to which this invention is applicable is for recognizing an input pattern represented by a time sequence of input feature vectors as a recognized pattern selected from a plurality of reference patterns which represent categories of recognition objects, respectively. Each of the reference patterns is defined by a sequence of state models.

According to this invention, the above-mentioned recognizing method comprises the steps of successively supplying the sequence of the state models with the time sequence of the input feature vectors and with a sequence of preceding state vectors to make the sequence of the state models produce a time sequence of predicted feature vectors and a sequence of new state vectors, of calculating a prediction error between the time sequence of the input feature vectors and the time sequence of the predicted feature vectors, and of selecting, as the recognized pattern, one of the reference patterns that minimizes the prediction error.

A method to which this invention is applicable is for training a plurality of state models defining a reference pattern representative of a reference category hy using a plurality of training patterns to adjust a plurality of parameters characterizing each of the state models.

According to a first aspect of this invention, each of the training patterns represents a training category identical with the reference category. The above-mentioned training method comprises the steps of a) initializing the parameters, of b) calculating a prediction error between the reference pattern and one of the training patterns at a time, of c) correcting the parameters so as to decrease the prediction error, and of d) iterating steps b) and c) for all of the training patterns.

According to a second aspect of this invention, each of the training patterns represents a training category different from the reference category. The afore-mentioned training method comprises the steps of a) initializing the parameters, b) calculating a prediction error between the reference pattern and one of the training patterns at a time, c) correcting the parameters so as to increase the prediction error, and d) iterating steps b) and c) for all of the training patterns.

Brief Description of the Drawing:

Fig. 1 shows a recursive neural network model for use in a pattern recognition method and a reference pattern training method according to this invention;

Fig. 2 shows a plane which visualizes a dynamic programming algorithm for use in the pattern recognition method and the reference pattern training method according to this invention;

Fig. 3 shows a flow chart for use in describing operation of the pattern recognition method according to this invention; and

Fig. 4 shows a flow chart for use in describing operation of the reference pattern training method according to this invention.

Description of the Preferred Embodiment:

(Principles of the Invention)

Description will at first be directed to principles of this invention to facilitate an understanding to this invention. In a pattern recognition method and a reference pattern training method according to this invention, a reference pattern represents a category of a recognition object and is defined by a plurality of sequentially arranged state models. An input pattern is represented by a time sequence of input feature vectors. Each state model is supplied with a specific one of the input feature vectors and a preceding state vector in the manner which will become clear as the description proceeds. Responsive to the specific input feature vector and the preceding state vector, the state model processes the specific input feature vector and the preceding state vector into a predicted feature vector and a new state vector.

More specifically, attention will be directed to a t-th or current time instant t. Up to the current time instant, a plurality of input feature vectors are supplied to the state model which acts as a predictor. From these input feature vectors, the predictor predicts, as the predicted feature vector, a feature vector to be produced at a next or a (t+1)-th time instant (t+1). In order to carry out better prediction, an optimal prediction is carried out by adaptively changing a plurality of predicting units so as to minimize a prediction error which is equal to a difference between the time sequence of the input feature vectors and a time sequence of predicted feature vectors produced by predictors by using, for example, dynamic programming which is known in the art. On recognizing, the prediction error is used as a distance between the time sequence of the input feature vectors and the time sequence of the predicted feature vectors. Training of the reference pattern is carried out by using a gradient descent method which uses the prediction error as a cost function.

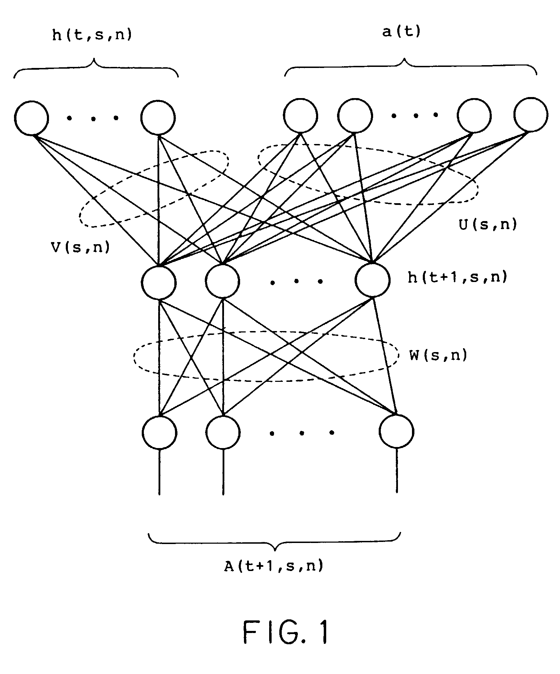

Referring to Fig. 1, description will be made as regards the pattern recognition method and the reference pattern training method according to this invention. Herein, speech recognition will be exemplified although this invention is applicable also to other pattern recognition provided that a pattern is represented by a time sequence of vectors.

Attention will be directed to the current time instant t. Up to the current time instant t, the state model or the predictor is supplied with the input feature vectors of an input speech that are depicted at $a(1)$, $a(2)$, ..., and $a(t)$. From these input feature vectors $a(1)$ to $a(t)$, the state model (the predictor) predicts the predicted feature vector at the next time instant (t+1). The predicted feature vector is depicted at $A(t+1)$. The predictor is supplied with the input feature vectors $a(1)$ to $a(t)$ which are produced in the past in the manner which will presently be described. One of such a state model is a state model like a finite impulse response (FIR) filter which is supplied with the input feature vectors having a fixed finite length that are extracted from the input speech in the past. Another state model is a state model like an infinite impulse response (IIR) filter which is supplied with the input feature vectors equivalently having an infinite length in the past by means of feedback. A specific case will be taken into consideration where feedback has, in the state model like the IIR filter, parameters which are all equal to zero. In this case, the state model like the IIR filter is regarded as the state model like the FIR filter. Therefore, description will hereunder be made as regards the state model like the IIR filter.

It will be assumed as follows. The input speech is represented by a time sequence of first through T-th input feature vectors $a(1)$ to $a(T)$ placed at first through T-th time instants 1 to T where T represents a first predetermined natural number which is not less than two. A recognized pattern is selected from first through S-th reference patterns which represent first through S-th categories, namely, words $w(1)$ to $w(S)$ where S represents a second predetermined natural number which is not less than two. An s-th reference pattern is defined by first through Ns-th state models $s(1)$ to $s(Ns)$ where Ns represents a third predetermined natural number which is not greater than the first predetermined number and which is not less than two and s is variable between 1 and S, both inclusive. The third predetermined natural number Ns depends on the s-th reference pattern.

Under the circumstances, an n-th state model defining the s-th reference pattern is characterized as follows:

$$h(t+1, s, n) = f[a(t), h(t, s, n), X], \tag{1}$$

$$A(t+1, s, n) = g[a(t), h(t+1, s, n), Y], \tag{2}$$

where n is variable between 1 and Ns, both inclusive, t is variable between 1 and (T-1), both inclusive, a(t) is a t-th input feature vector at the t-th time instant t, h(t, s, n) is the preceding state vector produced by the n-th state model for an s-th word at the t-th time instant t, X represents a plurality of primary parameters, Y represents a plurality of secondary parameters, h(t+1, s, n) is the new state vector produced by the n-th state model for the s-th word at the (t+1)-th time instant (t+1), A(t+1, s, n) is the predicted feature vector produced by the n-th state model for the s-th word at the (t+1)-th time instant (t+1), a function notation f represents a first nonlinear vector function characterized by the primary parameters X, and a function notation g represents a second nonlinear vector function characterized by the secondary parameters Y.

As apparent from the above-mentioned equations (1) and (2), the new state vector h(t+1, s, n) and the predicted feature vector A(t+1, s, n) are calculated by using only the t-th input feature vector a(t). However, the new state vector h(t+1, s, n) and the predicted feature vector A(t+1, s, n) may be calculated by using previous input feature vectors, for example, a (t-2)-th through the t-th input feature vectors a(t-2) to a(t).

As shown in Fig. 1, a recursive neural network model may be used as each state model, which is an n-th state model and will later be illustrated. The recursive neural network model comprises an input layer, a hidden or middle layer, and an output layer. The input layer comprises a plurality of primary input units and a plurality of secondary input units. The hidden layer comprises a plurality of hidden units. The output layer comprises a plurality of output units. The primary input units are supplied with the t-th input feature vector a(t). The secondary input units are supplied with the preceding state vector h(t, s, n). The hidden units produce the new state vector h(t+1, s, n). The output units produce the predicted feature vector A(t+1, s, n). In this event, the recursive neural network model is characterized as follows:

$$h(t+1, s, n) = f[U(s, n)a(t) + V(s, n)h(t, s, n)], \tag{3}$$

$$A(t+1, s, n) = g[W(s, n)h(t+1, s, n)], \tag{4}$$

where U(s, n) is a first coefficient matrix for connecting between the primary input units and the hidden units, V(s, n) is a second coefficient matrix for connecting between the secondary input units and the hidden units, and W(s, n) is a third coefficient matrix for connecting between the hidden units and the output units. A combination of the first and the second coefficient matrices U(s, n) and V(s, n) corresponds to the primary parameter X given by the above-mentioned equation (1). The third coefficient matrix W(s, n) corresponds to the secondary parameter Y given by the above-mentioned equation (2). In the equations (3) and (4), each of the first and the second nonlinear vector functions f and g gives a vector obtained by applying a sigmoid function to each component of an argument vector.

As apparent from the equation (3), the feedback is implemented by supplying the preceding state vector h(t, s, n) to the secondary input units of the recursive neural network model. According to the feedback using the preceding state vector h(t, s, n), the predicted feature vector A(t+1, s, n) reflects the input feature vector having the infinite length up to the t-th time instant t.

For simplification purposes, the description will be made as regards the pattern recognition method using as the state model the recursive neural network model shown in Fig. 1 although this invention is well applicable to the pattern recognition method using the state model represented by the above-mentioned equations (1) and (2).

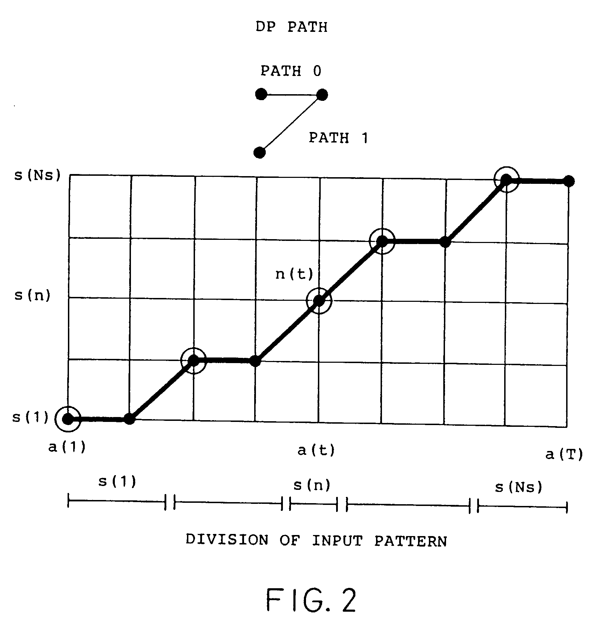

Turning to Fig. 2, the description will proceed to a recognition algorithm for recognizing the input speech pattern by using the first through the S-th reference patterns. It will be assumed that the s-th reference pattern is defined by a set of the first through the Ns-th state models s(1) to s(Ns). The n-th state model s(n) defining the s-th reference pattern is represented by the above-mentioned equations (3) and (4). In the manner known in the art, the input speech pattern is represented by the time sequence of the first through the T-th input feature vectors a(1) to a(T). A distance D(s) will be used as a measure of similarity or likelihood between the input speech and the s-th reference pattern and is defined under the circumstances as follows:

EP 0 397 136 B1

$$D(s) = \min_{n(t)} \sum_{t=1}^{T} \|A(t, s, n(t)) - a(t)\|^2, \quad (5)$$

where a notation $\|\ \|$ represents a Euclidian norm of a vector and $A(t, s, n(t))$ represents the feature vector predicted by a $n(t)$-th state model for the s-th word. Here, $n(t)$ determines which of the state models is assigned to the prediction at the t-th time instant t and is a monotone non-decreasing function which must satisfy the following constraints:

$$n(1) = 1, \quad (6)$$

$$n(T) = Ns, \quad (7)$$

and

$$n(t) = n(t-1) \text{ or } n(t-1) + 1. \quad (8)$$

Under these constraints, minimization of the distance $D(s)$ can be accomplished by the use of a dynamic programming (DP) algorithm known in the art as shown in Fig. 2.

Fig. 2 illustrates a plane which visualizes the DP algorithm, where the abscissa and the ordinate represent the time sequence of the first through the T-th input feature vectors $a(1)$ to $a(T)$ of the input speech pattern and the sequence of the first through the Ns-th state models $s(1)$ to $s(Ns)$ for the s-th word, respectively. Notations $n(1)$ to $n(T)$ represent lattice points on the plane along DP paths, each of which is selected either along path 0 or path 1.

Attention must be necessary to process boundary points where transitions from one to another occur along the path 1 in the state models $s(1)$ to $s(Ns)$. Each of the boundary point is a lattice point represented by an encircled dot in Fig. 2. Although the state models $s(1)$ to $s(Ns)$ are predictors which are independent of one another, each state model is supplied with the preceding state vector. It will be assumed that a transition from the (n-1)-th state model $s(n-1)$ to the n-th state model $s(n)$ occurs along the path 1 at the t-th time instant t. In this case, it must be predetermined that which of two new state vectors produced by the (n-1)-th state model $s(n-1)$ and the n-th state model $s(n)$ is used as the preceding state vector supplied to the n-th state model $s(n)$.

In the example being illustrated, all of the state models produce the new state vectors which have a plurality of components equal in number to one another. At the boundary point, the n-th state model $s(n)$ is supplied with, as the preceding state vector, the new state vector produced by the (n-1)-th state model $s(n-1)$.

Attention will be directed to a basic recognition algorithm which includes processing of the boundary points. The basic recognition algorithm is divided into initialization process, iteration process, and result recognition process. The initialization process initializes initial conditions $(t = 1)$ given by:

$$H(1, s, n) = f[U(s, n)a(1)], \quad (A1)$$

$$A(1, s, n) = g[W(s, n)H(1, s, n)], \quad (A2)$$

and

$$j(s, 1, n) = \|A(1, s, n) - a(1)\|^2, \quad (A3)$$

where $j(s, 1, n)$ represents an accumulated distance at start lattice points, namely, $(t, n) = (1, n)$. The predicted feature vector $A(1, s, n)$ is predicted from the first input feature vector $a(1)$. This is because no information is present before the first time instant 1.

The iteration process is represented by a set of seven recurrence formulas $(1 < t \leq T, p = (0, 1))$ as follows:

5

$$h(t, s, n, p) = f[U(s, n)a(t-1)$$

$$+ V(s, n)H(t-1, s, n-p)], \tag{B1}$$

$$A(t, s, n, p) = g[W(s, n)h(t, s, n, p)], \tag{B2}$$

$$d(t, s, n, p) = \|A(t, s, n, p) - a(t)\|^2, \tag{B3}$$

$$j(t, s, n, p) = [d(t, s, n, p) + j(t, s, n-p)], \tag{B4}$$

$$j(t, s, n) = \min_{p=(0, 1)} [j(t, s, n, p)], \tag{B5}$$

$$P = \text{argmin}_p [j(t, s, n, p)], \tag{B6}$$

and

$$H(t, s, n) = h(t, s, n, P), \tag{B7}$$

where p is a variable which represents the DP path. The path 0 is represented by p = 0 while the path 1 is represented by p = 1. In each lattice point (t, n), the iteration process calculates the new state vector, namely, outputs of the hidden units h(t, s, n, p) in correspondence to the path 0 and the path 1. Subsequently, the iteration process calculates a distance d(t, s, n, p) between the input feature vector a(t) and the predicted feature vector A(t, s, n, p). Finally, the iteration process calculates an optimum DP path P and the accumulated distance j(s, t, n). The state vector h(t, s, n, P) is used in predicting the predicted feature vector on the optimum DP path and is stored as the state vector H(t, s, n) in a memory (not shown) for the lattice point (t, n).

The result recognition process calculates a recognition result σ as follows:

$$D(s) = j(s, T, Ns), \tag{C1}$$

and

$$\sigma = \text{argmin}_s [D(s)]. \tag{C2}$$

A final accumulated distance j(s, T, Ns) is equal to the distance D(s) between the input speech and the s-th reference pattern representing the s-th word w(s). The recognition result σ represents one of the first through the S-th words w(1) to w(S) that minimizes the distance D(s).

As described above, the pattern recognition method according to this invention recognizes the input speech pattern by using the reference patterns, each defined by the state models which are not directly dependent on one another. It is therefore possible to carry out connected word recognition or continuous speech recognition by using a concatenated reference pattern which is a concatenation of selected ones of the reference patterns. In this case, the accumulated distance is calculated in synchronism with the time sequence of the input feature vectors and increases step by step with the lapse of the time. Accordingly, it is possible to efficiently carry out the connected word recognition by using the clockwise DP-matching algorithm which is known in the art.

The description will be directed to a training algorithm for training the state models defining the s-th reference pattern representative of the s-th word by using first through Ms-th training speech patterns where Ms represents a fourth predetermined natural number which is not less than two. It will be assumed that each of the first through the Ms-th training speech patterns represents the s-th word.

The parameters of the state models are preliminarily initialized by using random numbers. When the recursive neural network model is used as the state model, the parameters of the state model, four in number, are the matrices U(s, n), V(s, n), and W(s, n) and a threshold value assigned to the sigmoid function. Training of the s-th reference pattern is carried out to repeatedly correct the parameters K times by using the gradient descent method, where K represents a fifth predetermined natural number which is not less than two.

Attention will be directed to k-times repetition of the correction where k is variable between 1 and K, both inclusive. At k-times repetition of the correction, an average prediction error D(k, s) is defined as follows:

$$D(k, s) = (1/Ms) \sum_{m=1}^{Ms} D(k, s, m), \qquad (9)$$

and

$$D(k, s, m) = \min_{n(t)} \sum_{t=1}^{Tm} \| A(t, s, n(t), m, k) - a(t, m) \|^2, \qquad (10)$$

where m is variable between 1 and Ms, both inclusive, A(t, s, n(t), m, k) represents the predicted feature vector produced by the n-th state model s(n) which is supplied with an m-th training speech pattern represented by first through Tm-th training feature vectors a(1, m) to a(Tm, m), where Tm represents a sixth predetermined natural number which is not less than two. In order to decrease the average prediction error D(k, s), the gradient descent method is carried out on the optimum DP path. More particularly, the parameters X of the n(t)-th state model for the s-th word w(s) is corrected at a correction amount δX by using the gradient descent method so as to decrease the prediction error between the predicted feature vector A(t, s, n(t), m, k) and the t-th training feature vector a(t, m). The correction amount δX of the parameters X is given by:

$$\delta X = -\varepsilon \sum_{m=1}^{Ms} (\partial D(k, s, m)/\partial X), \qquad (11)$$

where ε is a small positive real number. When the recursive neural network model is used as the state model, the gradient descent method is identical with back-propagation (BP) technique. After the correction of the parameters X by the correction amount δX, the average prediction error D(k, s) becomes a corrected average prediction error Dbp (k, s). By the nature of the gradient descent method, the corrected average prediction error Dbp(k, s) is not greater than the average prediction error D(k, s) at k-times repetition of the correction, that is:

$$D(k, s) \geqq Dbp(k, s). \qquad (12)$$

The DP path n(t) at k-times repetition of the correction is not identical with the optimum DP path because the parameters X is corrected. At (k+1)-times repetition of the correction, an average prediction error D(k+1, s) is calculated on the optimum DP path. By optimization of the dynamic programming algorithm, the average prediction error D(k+1, s) at (k+1)-times repetition of the correction is not greater than the corrected average prediction error Dbp(k,s). That is:

$$Dbp(k, s) \geqq D(k+1, s). \qquad (13)$$

Combining the equations (12) and (13), it is understood that an average prediction error decreases without fail by iterative training. That is:

$$D(k+1, s) \leqq D(k, s). \tag{14}$$

As mentioned before, optimization can be made by the iterative training by using a combination of the dynamic programming algorithm and the back propagation technique.

In order to decrease misjudgment of the recognition, another training algorithm is for training the state models defining the s-th reference pattern representative of the s-th word by using a plurality of another training speech patterns, each representative of another word that is different from the s-th word. Such a training algorithm is referred to as a discriminative training algorithm. The discriminative training algorithm is similar to the above-mentioned training algorithm except that another correction amount for the untraining algorithm has a sign inverted relative to that of the correction amount $\delta X$ given by the equation (11). According to the untraining algorithm, it is possible to construct the state models of the s-th reference pattern so as to increase a prediction error between the s-th reference pattern and each of the training speech patterns that represents the other word different from the s-th word.

As mentioned above, each of the reference patterns is defined by the state models, each of which is supplied with the preceding state vector as a feedback signal. Accordingly, it is possible to carry out modeling a temporal correlation between the feature vectors which are spaced apart from one another by an optional time interval between the feature vectors in a temporal structure. In addition, each of the state models is characterized by the nonlinear vector function supplied with the preceding state vector and the input feature vector. As a result, it is possible to make the state model represent a spatial and temporal correlation between the temporal structure among the feature vectors and a distribution in a vector space for each feature vector. Furthermore, it is possible to automatically construct the state models of each reference pattern from a plurality of training patterns according to the reference pattern training method based on the above-mentioned gradient descent method.

(Embodiment)

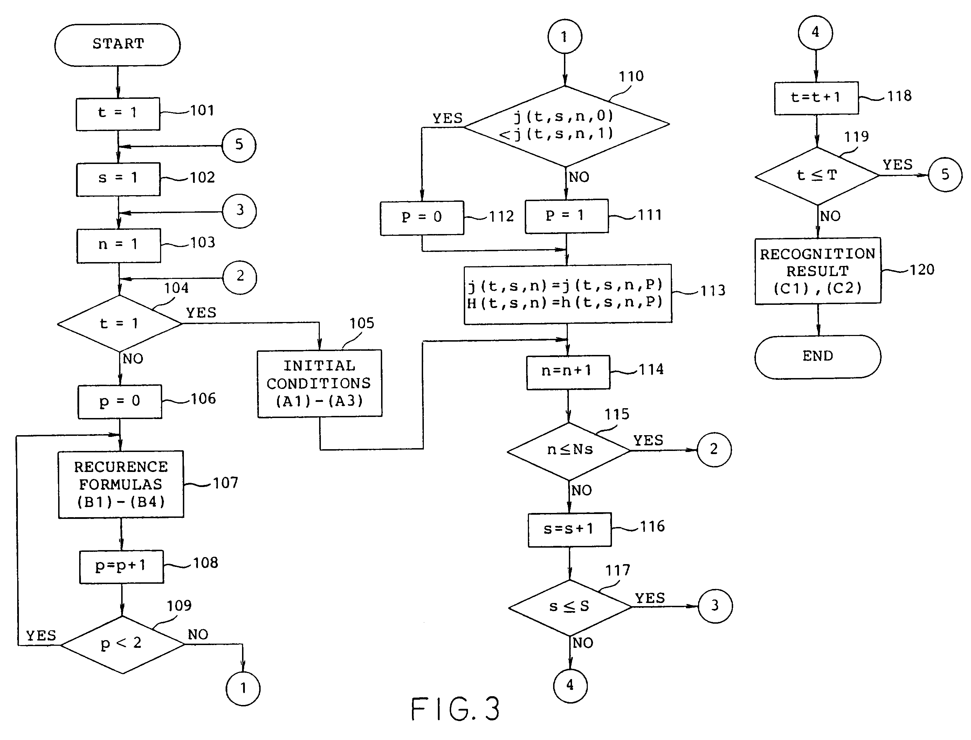

Referring to Fig. 3, the description will proceed to operation of the pattern recognition method according to this invention.

At first, all of the variables t, s, and n are initialized to be equal to one at steps 101, 102, and 103. The step 103 is followed by a step 104 for detecting a starting point of the input pattern, namely, whether or not the variable t is equal to one. When the variable t is equal to one, the step 104 proceeds to a step 105 which will presently be described. Otherwise, the step 104 is succeeded by a step 106 which will later be described.

The step 105 makes calculations of the above-described equations (A1) to (A3) which represent the initial conditions of the basic recognition algorithm.

The step 106 renders the variable p to zero. The step 106 is followed by a step 107. The step 107 makes calculations of the equations (B1) to (B4) which represent the recurrence formulas of the basic recognition algorithm. The step 107 proceeds to a step 108 at which one is added to the variable p. The step 108 is succeeded by a step 109 for detecting whether or not the variable p is less than two. When the variable p is less than two, the step 109 turns back to the step 107. Otherwise, the step 109 is followed by a step 110.

The step 110 is for comparing the accumulated distance j(t, s, n, 0) with the accumulated distance j(t, s, n, 1). When the accumulated distance j(t, s, n, 0) is not less than the accumulated distance j(t, s, n, 1), the step 110 proceeds to a step 111 which selects the path 1 on the optimum DP path P. Otherwise, the step 110 is succeeded by a step 112 which selects the path 0 on the optimum DP path P. Both of the steps 111 and 112 are followed by a step 113.

The step 113 sets up the accumulated distance j(t, s, n) and the new state vector H(t, s, n) on the optimum DP path P. In other words, the step 113 is for calculating the equations (B5) and (B7) which represent the recurrence formulas of the basic recognition algorithm. The step 113 proceeds to a step 114 which follows the step 105.

At the step 114, one is added to the variable n. The step 114 is succeeded by a step 115 for detecting whether or not the variable n is not greater than the third predetermined natural number Ns. When the variable n is not greater than the third predetermined natural number Ns, the step 115 turns back to the step 104. Otherwise, the step 115 is followed by a step 116.

At the step 116, one is added to the variable s. The step 116 is succeeded by a step 117 for detecting whether or not the variable s is not greater than the second predetermined natural number S. When the variable s is not greater than the second predetermined natural number S, the step 117 turns back to the step 103. Otherwise, the step 117 is followed by a step 118.

At the step 118, one is added to the variable t. The step 118 is succeeded by a step 119 for detecting whether or not the variable t is not greater than the first predetermined natural number T. When the variable t is not greater than the first predetermined natural number T, the step 119 turns back to the step 102. Otherwise, the step 119 is followed by a step 120.

At the step 120, the recognition result is selected from the first through the S-th words w(1) to w(S) in accordance with equations (C1) to (C2) which represent the result recognition process of the basic recognition algorithm.

As apparent from a flow chart shown in Fig. 3, it is possible to carry out processing in the step 101 through the step 119 for each input feature vector or within one frame. Therefore, it is possible to carry out processing in synchronism with the frame along a time axis of the input pattern. Taking advantage of this, it is possible to theoretically recognize the input pattern during a processing time interval between the starting point of the input pattern and a point which is one frame spaced from an end point of the input pattern. As a result, the pattern recognition method according to this invention can recognize the input pattern in real time.

In the example being illustrated, the description has been made as regards an isolated word recognition. In order to carry out the connected word recognition, the concatenation of selected reference patterns are used as mentioned before. The connected word recognition is carried out in the similar manner which is described above as the isolated word recognition. The recognition result represents one of the concatenation of selected reference patterns that minimizes a prediction error.

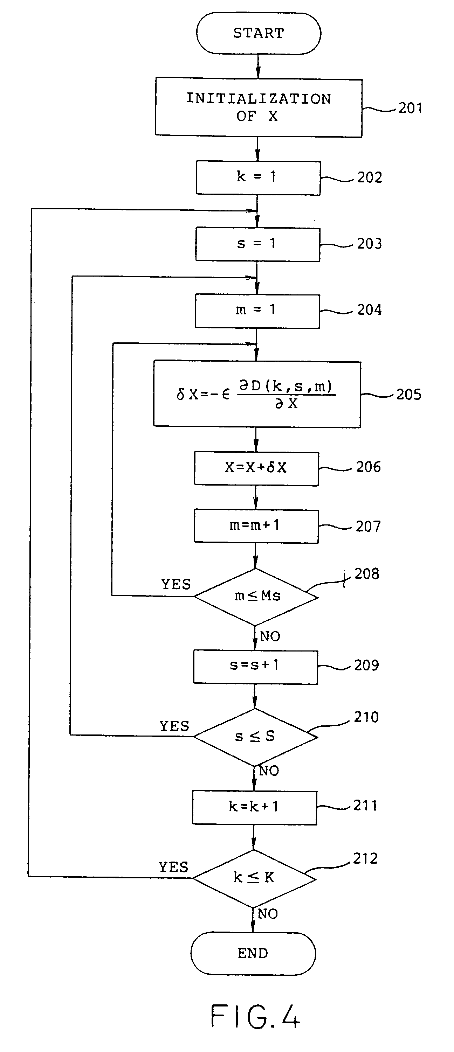

Referring to Fig. 4, the description will proceed to operation of the reference pattern training method according to this invention.

At first, a step 201 initializes the parameters X of the state models. Subsequently, all of the variables k, s, and m are initialized to one at steps 202, 203, and 204. The step 204 is followed by a step 205 for calculating the correction amount $\delta X$ by using the gradient descent method so as to decrease the prediction error D(k, s, m) for the m-th training speech pattern representing the s-th word w(s) at the k-times repetition of the correction. The step 205 proceeds to a step 206 which corrects the parameters X by the correction amount $\delta X$. The step 206 is succeeded by a step 207.

At the step 207, one is added to the variable m. The step 207 is followed by a step 208 for detecting whether or not the variable m is not greater than the fourth predetermined natural number Ms. When the variable m is not greater than the fourth predetermined natural number Ms, the step 208 turns back to the step 205. Otherwise, the step 208 proceeds to a step 209.

At the step 209, one is added to the variable s. The step 209 is followed by a step 210 for detecting whether or not the variable s is not greater than the second predetermined natural number S. When the variable s is not greater than the second predetermined natural number S, the step 210 turns back to the step 204. Otherwise, the step 210 proceeds to a step 211.

At the step 211, one is added to the variable k. The step 211 is followed by a step 212 for detecting whether or not the variable k is not greater than the fifth predetermined natural number K. When the variable k is not greater than the fifth predetermined natural number K, the step 212 turns back to the step 203. Otherwise, processing of the training comes to an end.

In order to carry out the untraining of the reference pattern, the correction amount $\delta X$ (the step 205 in Fig. 4) should be given an inverted sign.

## Claims

1. A method of recognizing an input pattern represented by a time sequence of input feature vectors as a recognized pattern selected from a plurality of reference patterns which represent categories of recognition objects, respectively, each of said reference patterns being defined by a sequence of state models, said method comprising the steps of:

   successively supplying said sequence of the state models with said time sequence of the input feature vectors and with a sequence of preceding state vectors to make said sequence of the state models produce a time sequence of predicted feature vectors and a sequence of new state vectors;
   calculating a prediction error between said time sequence of the input feature vectors and said time sequence of the predicted feature vectors; and
   selecting, as said recognized pattern, one of said reference patterns that minimizes said prediction error.

2. A method as claimed in Claim 1, wherein each of said state model is represented by a nonlinear function of a plurality of parameters.

3. A method as claimed in Claim 1 or 2, wherein said state model is a recursive neural network model.

4. A method of training a plurality of state models defining a reference pattern representative of a category by using a plurality of training patterns, each representing said category to adjust a plurality of parameters characterizing each of said state models, said reference pattern being suitable for use in the method of Claim 1 said method comprising the steps of:

a. initializing said parameters;
b. calculating a prediction error between said reference pattern and one of said training patterns at a time;
c. correcting said parameters so as to decrease said prediction error; and
d. iterating steps b and c for all of said training patterns.

**5.** A method of training a plurality of state models defining a reference pattern representative of a reference category by using a plurality of training patterns, each representing a training category different from said reference category to adjust a plurality of parameters characterizing each of said state models, said reference pattern being suitable for use in the method of Claim 1 said method comprising the steps of:

a. initializing said parameters;
b. calculating a prediction error between said reference pattern and one of said training patterns at a time;
c. correcting said parameters so as to increase said prediction error; and
d. iterating steps b and c for all of said training patterns.

**Patentansprüche**

**1.** Verfahren zur Erkennung eines Eingabemusters, das durch eine zeitliche Folge von Eingabe-Merkmalvektoren als erkanntes Muster dargestellt wird, das aus einer Vielzahl von Bezugsmustern ausgewählt wurde, welche jeweils Kategorien von Erkennungsobjekten darstellen, wobei jedes der Bezugsmuster durch eine Folge von Zustandsmodellen definiert ist und das Verfahren die Schritte aufweist:

aufeinanderfolgendes Liefern der Folge von Zustandsmodellen mit der zeitlichen Folge der Eingabe-Merkmalvektoren und mit einer Folge von vorhergehenden Zustandsvektoren, um die Folge von Zustandsmodellen zum Erstellen einer zeitlichen Folge von vorhergesagten Merkmalvektoren und einer Folge von neuen Zustandsvektoren zu veranlassen;
Errechnen eines vorhergesagten Fehlers zwischen der zeitlichen Folge der Eingabe-Merkmalvektoren und der zeitlichen Folge der vorhergesagten Merkmalvektoren; und
Auswählen eines Bezugsmusters aus den Bezugsmustern als das erkannte Muster, das den Vorhersagefehler minimiert.

**2.** Verfahren nach Anspruch 1, wobei jedes Zustandsmodell durch eine nicht-lineare Funktion einer Vielzahl von Parametern dargestellt wird.

**3.** Verfahren nach Anspruch 1 oder 2, wobei das Zustandsmodell ein rekursives neurales Netzmodell ist.

**4.** Verfahren zum Lernen einer Vielzahl von Zustandsmodellen, die ein für eine Kategorie typisches Bezugsmuster definieren, durch Anwenden einer Vielzahl von Lernmustern, von denen jedes die Kategorie darstellt, um eine Vielzahl von Parametern einzustellen, die jedes der Zustandsmodelle kennzeichnen, wobei das Bezugsmuster in dem Verfahren von Anspruch 1 verwendbar ist, und wobei das Verfahren die Schritte aufweist:

a. Initialisierung der Parameter;
b. Errechnen eines Vorhersagefehlers zwischen dem Bezugsmuster und einem der Lernmuster zum gleichen Zeitpunkt;
c. Korrigieren der Parameter, um so den Vorhersagefehler zu verringern; und
d. Wiederholung der Schritte b und c bei allen Lernmustern.

**5.** Verfahren zum Lernen einer Vielzahl von Zustandsmodellen, die ein für eine Referenzkategorie typisches Bezugsmuster definieren, durch Anwenden einer Vielzahl von Lernmustern, von denen jedes eine Lernkategorie darstellt, die von der Referenzkategorie abweicht, um eine Vielzahl von Parametern einzustellen, die jedes der Zustandsmodelle kennzeichnen, wobei das Bezugsmuster in dem Verfahren von Anspruch 1 verwendbar ist, und wobei das Verfahren die Schritte aufweist:

a. Initialisierung der Parameter;
b. Errechnen eines Vorhersagefehlers zwischen dem Bezugsmuster und einem der Lernmuster zum gleichen Zeitpunkt;
c. Korrigieren der Parameter, um so den Vorhersagefehler zu erhöhen; und

d. Wiederholung der Schritte b und c bei allen Lernmustern.

**Revendications**

1. Procédé de reconnaissance d'un motif d'entrée représenté par une séquence temporelle de vecteurs de caractéristique d'entrée en tant que motif reconnu sélectionné parmi une pluralité de motifs de référence qui représentent respectivement des catégories d'objets de reconnaissance, chacun desdits motifs de référence étant défini par une séquence de modèles d'état, ledit procédé comprenant les étapes de :

    application successivement de ladite séquence des modèles d'état avec ladite séquence temporelle des vecteurs de caractéristique d'entrée et avec une séquence de vecteurs d'état précédents pour faire en sorte que ladite séquence des modèles d'état produise une séquence temporelle de vecteurs de caractéristique prédits et une séquence de nouveaux vecteurs d'état ;
    calcul d'une erreur de prédiction entre ladite séquence temporelle des vecteurs de caractéristique d'entrée et ladite séquence temporelle des vecteurs de caractéristique prédits ; et
    sélection, en tant que dit motif reconnu, de celui desdits motifs de référence qui minimise ladite erreur de prédiction.

2. Procédé selon la revendication 1, dans lequel chaque dit modèle d'état est représenté par une fonction non linéaire d'une pluralité de paramètres.

3. Procédé selon la revendication 1 ou 2, dans lequel ledit modèle d'état est un modèle de réseau neuronal récursif.

4. Procédé d'apprentissage d'une pluralité de modèles d'état définissant un motif de référence représentatif d'une catégorie en utilisant une pluralité de motifs d'apprentissage, chacun représentant ladite catégorie, afin de régler une pluralité de paramètres caractérisant chacun desdits modèles d'état, ledit motif de référence convenant pour une utilisation selon le procédé de la revendication 1, ledit procédé comprenant les étapes de :

    a. initialisation desdits paramètres ;
    b. calcul d'une erreur de prédiction entre ledit motif de référence et l'un desdits motifs d'apprentissage à un instant donné ;
    c. correction desdits paramètres de manière à diminuer ladite erreur de prédiction ; et
    d. itération des étapes b et c pour tous lesdits motifs d'apprentissage.

5. Procédé d'apprentissage d'une pluralité de modèles d'état définissant un motif de référence représentatif d'une catégorie de référence en utilisant une pluralité de motifs d'apprentissage, chacun représentant une catégorie d'apprentissage différente de ladite catégorie de référence, afin de régler une pluralité de paramètres caractérisant chacun desdits modèles d'état, ledit motif de référence convenant pour une utilisation selon le procédé de la revendication 1, ledit procédé comprenant les étapes de :

    a. initialisation desdits paramètres ;
    b. calcul d'une erreur de prédiction entre ledit motif de référence et l'un desdits motifs d'apprentissage à un instant donné ;
    c. correction desdits paramètres de manière à augmenter ladite erreur de prédiction ; et
    d. itération des étapes b et c pour tous lesdits motifs d'apprentissage.

FIG. 1

DP PATH

PATH 0

PATH 1

DIVISION OF INPUT PATTERN

FIG. 2

FIG.3

START → t = 1 (101) → s = 1 (102) → n = 1 (103) → [t = 1] (104)
(5) → s = 1
(3) → n = 1
(2) → [t = 1]

[t = 1] (104) — YES → INITIAL CONDITIONS (A1)–(A3) (105)
[t = 1] (104) — NO → p = 0 (106) → RECURENCE FORMULAS (B1)–(B4) (107) → p=p+1 (108) → [p < 2] (109)
[p < 2] (109) — YES → (back to RECURENCE FORMULAS)
[p < 2] (109) — NO → (1)

(1) → [j(t,s,n,0) < j(t,s,n,1)] (110)
[j(t,s,n,0) < j(t,s,n,1)] (110) — YES → P = 0 (112)
[j(t,s,n,0) < j(t,s,n,1)] (110) — NO → P = 1 (111)
→ j(t,s,n)=j(t,s,n,P)  H(t,s,n)=h(t,s,n,P) (113) → n=n+1 (114) → [n ≤ Ns] (115)
[n ≤ Ns] (115) — YES → (2)
[n ≤ Ns] (115) — NO → s=s+1 (116) → [s ≤ S] (117)
[s ≤ S] (117) — YES → (3)
[s ≤ S] (117) — NO → (4)

(4) → t=t+1 (118) → [t ≤ T] (119)
[t ≤ T] (119) — YES → (5)
[t ≤ T] (119) — NO → RECOGNITION RESULT (C1),(C2) (120) → END

FIG.4